# EUROPEAN PATENT SPECIFICATION

(11) **EP 2 554 262 B1**
(45) Date of publication and mention of the grant of the patent: **27.11.2019**
(21) Application number: 11765673.6
(22) Date of filing: 30.03.2011
(51) Int. Cl.: B01J 35/04, B01D 46/00, B01D 53/94, B01J 23/656, F01N 3/022, F01N 3/28, B01J 37/02, C04B 38/00

(54) **HONEYCOMB FILTER**
WABENSTRUKTURFILTER
FILTRE EN NID D'ABEILLES

(30) Priority: 31.03.2010 JP 2010081899
(43) Date of publication of application: 06.02.2013
(60) Divisional application: 19183475.3
(73) Proprietor: NGK Insulators, Ltd., Nagoya-City, Aichi-ken 467-8530 (JP)
(72) Inventor: AOYAMA, Tomokatsu, Nagoya-city Aichi 467-8530 (JP); MIZUTANI, Takashi, Nagoya-city Aichi 467-8530 (JP)
(74) Representative: Mewburn Ellis LLP
(86) International application number: PCT/JP2011/058083
(87) International publication number: WO 2011/125773

(56) References cited:
- EP-A1- 2 105 195
- WO-A1-2009/118866
- WO-A1-2009/141889
- GB-A- 2 067 915
- JP-A- 2006 159 020
- JP-A- 2008 296 141
- US-A1- 2008 295 469

## Description

### Technical Field

The present invention relates to a honeycomb filter.

### Background Art

One proposed honeycomb filter includes a porous partition portion, in which a cell that is open at one end and closed at the other end and a cell that is closed at one end and open at the other end are alternately disposed, and a layer for trapping and removing particulate matter (PM) contained in an exhaust gas formed on the partition portion (see, for example, Patent Documents 1 to 3). This honeycomb filter can trap PM using the trapping layer with low pressure loss.
Patent Document 1: JP 2004-216226 A
Patent Document 2: JP 6-33734 A
Patent Document 3: JP 1-304022 A

US 2008/295469 discloses a honeycomb filter including a honeycomb structure having partition walls and plugging portions. A first wall portion of the partition walls carries an oxidation catalyst on the inner surfaces of its pores.

### Disclosure of Invention

Regarding such honeycomb filters, for example, in order to comply with future emission controls or smaller exhaust-gas purification systems, there is a demand for honeycomb filters loaded with a catalyst for removing nitrogen compounds (NOx) and unburned gases (for example, hydrocarbon (HC) and CO) from exhaust gases. Such catalysts are primarily noble metals, such as platinum (Pt), palladium (Pd), and rhodium (Rh). Because noble metals are a scarce resource, it is desirable to decrease the usage of such a catalyst. There is also a demand for higher exhaust gas purification performance utilizing excess catalyst loading. Thus, it is desirable to decrease the usage of a catalyst while improving exhaust gas purification.

In view of the situations described above, it is a principal object of the present invention to provide a honeycomb filter that can more efficiently remove target substances in a fluid with a decreased amount of catalyst.

In order to achieve the principal object, the present invention has employed the following means.

A honeycomb filter according to an aspect of the present invention is described in claim 1.

In this honeycomb filter, the catalyst is loaded on the partition portions and the trapping layers such that the catalyst amount A at a partition-intersecting portion is smaller than the catalyst amount B at a partition central portion. Thus, the honeycomb filter can more efficiently remove target substances in a fluid with a decreased amount of catalyst. A reason for this is assumed as described below. For example, it is assumed that partition-intersecting portions of a plurality of partition portions have higher permeation resistance to a fluid than partition central portions and are difficult for the fluid to pass through. Thus, the amount of catalyst can be decreased on the partition-intersecting portions having high permeation resistance to the fluid. However, the permeation resistance of the partition central portions increases as solid components in the fluid are trapped. This increases the fluid passing through the partition-intersecting portions. Thus, the partition-intersecting portions also need a catalyst. In accordance with the present invention, the relationship between the amount of catalyst at a partition-intersecting portion and the amount of catalyst at a partition central portion is optimized to purify a fluid with a decreased amount of catalyst. Furthermore, a trapping layer formed on a partition portion can prevent solid components in a fluid from entering the partition portion. This decreases the frequency of contact between a catalyst loaded on the partition portion and trapped solid components and can reduce catalyst degradation caused by rapid heat generation (thermal shock) of the solid components or catalyst poisoning caused by the solid components. This can obviate the need for an excessive amount of catalyst in consideration of catalyst degradation and decrease the amount of catalyst. Examples of the "target substances" to be removed include solid components (PM), nitrogen compounds (NOx), and unburned gases (for example, hydrocarbon (HC) and CO) contained in fluids. The phrase "the amount of catalyst at a partition-intersecting portion", as used herein, refers to the amount of catalyst (% by mass) at the partition-intersecting portion determined by elementary analysis with an electron microscope. The phrase "the amount of catalyst at a partition central portion", as used herein, refers to the amount of catalyst (% by mass) at the partition central portion determined by elementary analysis with an electron microscope. It may be the amount of catalyst per apparent unit volume (g/L) obtained by multiplying the amount of catalyst (% by mass) by the total weight of a target honeycomb filter and dividing the product by the volume of the honeycomb filter. In this honeycomb filter, the cells include open inlet cells, which have an open inlet and a sealed outlet, and open outlet cells, which have a sealed inlet and an open outlet. The open inlet cells and the open outlet cells may be adjacent to each other.

In a honeycomb filter according to an aspect of the present invention, the catalyst amount A and the catalyst amount B may satisfy the relationship of 0.60 ≤ A/B ≤ 0.90. At a ratio A/B of 0.60 or more, when the fluid flow decreases in partition central portions and increases in partition-intersecting portions, a catalyst on the partition-intersecting portions can efficiently remove target substances. At a ratio A/B of 0.90 or less, the amount of catalyst can be effectively decreased. The ratio A/B of the catalyst amount A to the catalyst amount B is more preferably 0.75 or more and 0.85 or less.

In a honeycomb filter according to some embodiments of the present invention, the trapping layers are loaded with a catalyst, a catalyst amount C at a trapping layer corner, which is a portion of a trapping layer formed on a corner of a cell, and a catalyst amount D at a trapping layer central portion, which is a portion of a trapping layer formed on a midsection of a partition portion, satisfy the relationship of 0.80 ≤ C/D ≤ 0.95. This allows target substances in a fluid to be more efficiently removed with a decreased amount of catalyst on a corner and a central portion of the trapping layers. The reason for this is assumed as described below. For example, in general, solid components deposited on a partition are burnt using a fluid as a heat source by the action of a catalyst contained in the partition portions. A fluid tends to pass through a partition central portion because of its low permeation resistance. Thus, the removal of solid components by combustion (hereinafter also referred to as regeneration treatment) begins with the combustion of solid components deposited on the trapping layer central portion. While part of solid components deposited on a corner (a partition portion and a trapping layer) of a cell are burnt by the action of a catalyst loaded on the corner, the remainder of the solid components on the corner is also burnt by utilizing high-temperature gas generated by the combustion of solid components deposited on a partition central portion as a heat source. Thus, in a suitable C/D range, the amount of catalyst at a cell corner can be decreased while a fluid is appropriately purified. At a ratio of the catalyst amount C to the catalyst amount D of 0.80 or more, when the fluid flow decreases in trapping layer central portions and increases in cell corners, a catalyst on the cell corners and partition-intersecting portions can efficiently remove target substances. At a ratio C/D of 0.95 or less, the amount of catalyst can be effectively decreased. The phrase "the amount of catalyst at a trapping layer corner", as used herein, refers to the amount of catalyst (% by mass) at the trapping layer corner determined by the elementary analysis with an electron microscope. The phrase "the amount of catalyst at a trapping layer central portion", as used herein, refers to the amount of catalyst (% by mass) at the trapping layer central portion determined by the elementary analysis with an electron microscope.

In a honeycomb filter according to an aspect of the present invention, the catalyst is at least one of catalysts for promoting combustion of trapped solid components, catalysts for oxidizing unburned gases contained in a fluid, and catalysts for decomposing nitrogen compounds. This allows any one of target substances, that is, solid components, unburned gases, and nitrogen compounds, contained in a fluid to be removed with a decreased amount of catalyst.

In a honeycomb filter according to an aspect of the present invention, the trapping layers may be formed by supplying an inorganic material that is a raw material for the trapping layers to the cells using a gas as a transport medium. Transportation using a gas can be utilized to relatively easily control the morphology, such as the thickness, of the trapping layer.

In a honeycomb filter according to an aspect of the present invention, the partition portions may contain one or more inorganic materials selected from cordierite, SiC, mullite, aluminum titanate, alumina, silicon nitride, SIALON, zirconium phosphate, zirconia, titania, and silica. The trapping layers may contain one or more inorganic materials selected from cordierite, SiC, mullite, aluminum titanate, alumina, silicon nitride, SIALON, zirconium phosphate, zirconia, titania, and silica. Preferably, the trapping layers are formed of the material of the partition portions.

A honeycomb filter according to an aspect of the present invention may be formed by joining two or more honeycomb segments with a bonding layer. Each of the honeycomb segments has the partition portion and the trapping layer. Joining with the bonding layer can increase the mechanical strength of the honeycomb filter.

### Brief Description of Drawings

Fig. 1 is a schematic explanatory view of an example of the structure of a honeycomb filter 20.
Fig. 2 is an explanatory view of a method for calculating the thickness of a trapping layer on the basis of SEM observation.
Fig. 3 is an explanatory view of a vertical cross section of cells 23 in the honeycomb filter 20.
Fig. 4 is an explanatory view of a vertical cross section of cells 23 in a honeycomb filter 20B.
Fig. 5 is an explanatory view of points for measuring the amount of catalyst in the honeycomb filter 20.
Fig. 6 is an explanatory view of points for measuring the amount of catalyst in the honeycomb filter 20B.
Fig. 7 is a schematic explanatory view of an example of the structure of a honeycomb filter 40.
Fig. 8 is the result of measurements of initial NOx removal rate and NOx removal rate after repetition for Comparative Examples 1 to 3 and Examples 1 to 3 relative to Comparative Example 1.
Fig. 9 is the result of measurements of initial NOx removal rate and NOx removal rate after repetition for Comparative Examples 4 to 6 and Examples 4 to 6 relative to Comparative Example 4.
Fig. 10 is the result of measurements of regeneration efficiency for Comparative Examples 7 to 10 and Examples 7 to 10 relative to Comparative Examples 7 and 9.

### Best Modes for Carrying Out the Invention

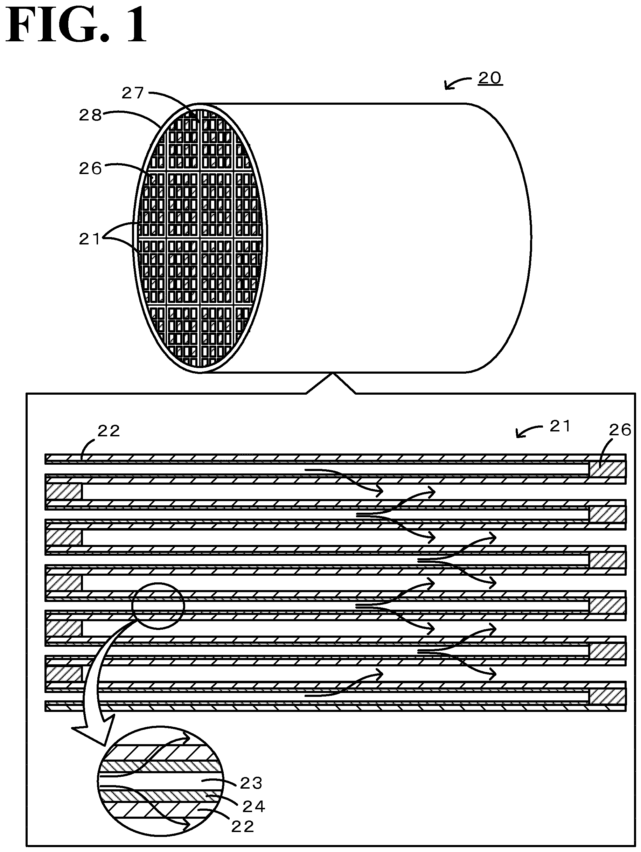

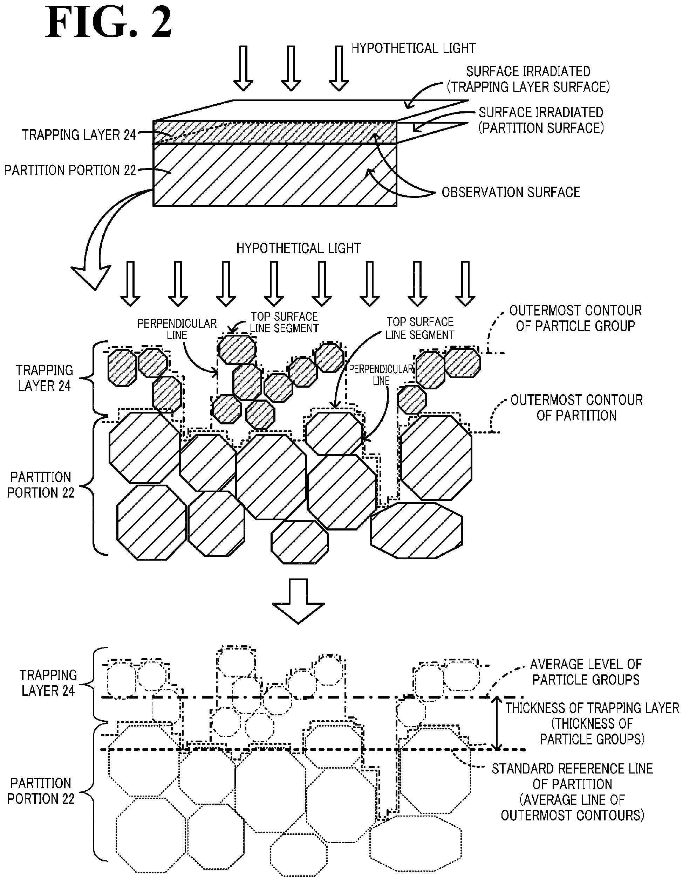

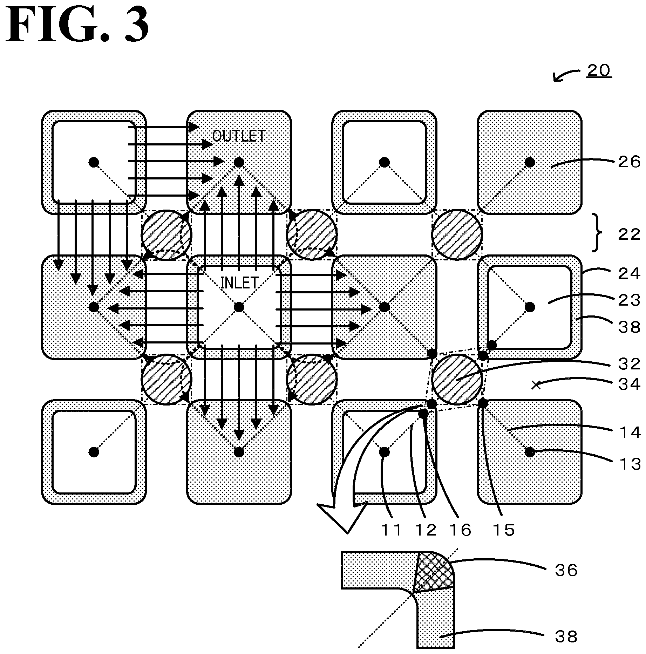

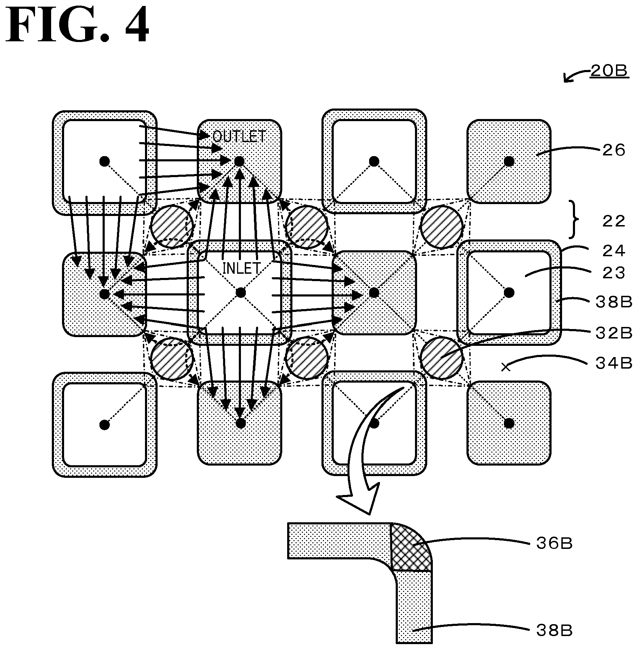

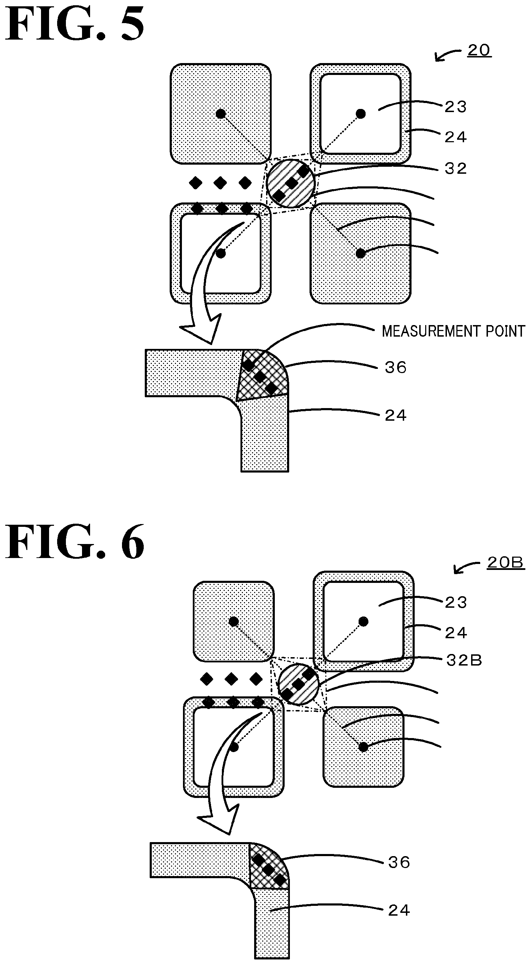

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of a method for calculating the thickness of a trapping layer on the basis of SEM observation. Fig. 3 is an explanatory view of a vertical cross section of cells 23 in the honeycomb filter 20, Fig. 4 is an explanatory view of a vertical cross section of cells 23 in a honeycomb filter 20B, Fig. 5 is an explanatory view of points for measuring the amount of catalyst in the honeycomb filter 20, and Fig. 6 is an explanatory view of points for measuring the amount of catalyst in the honeycomb filter 20B. As illustrated in Fig. 1, the honeycomb filter 20 according to the present embodiment includes two or more honeycomb segments 21 joined together with a bonding layer 27 and an outer protective portion 28 disposed around the honeycomb segments 21. Each of the honeycomb segments 21 includes a partition portion 22. The honeycomb filter 20 includes porous partition portions 22 each forming a cell 23, the cell 23 being open at one end and sealed with a sealing portion 26 at the other end and serving as an exhaust gas flow path, at least part of the partition portions being loaded with a catalyst, and a trapping layer 24 for trapping and removing solid components (hereinafter also referred to as PM) contained in a fluid, the trapping layer being disposed on each of the partition portions 22, at least part of the trapping layer being loaded with a catalyst. In Fig. 1, the honeycomb filter 20 is cylindrical, each of the honeycomb segments 21 is rectangular columnar, and each of the cells 23 is rectangular. In the honeycomb filter 20, the partition portion 22 is formed such that a cell 23 that is open at one end and closed at the other end and a cell 23 that is closed at one end and open at the other end are alternately disposed. In the honeycomb filter 20, an exhaust gas enters a cell 23 having an opening on the inlet side (hereinafter also referred to as an inlet cell), passes through the trapping layer 24 and the partition portion 22, and is exhausted from another cell 23 having an opening on the outlet side (hereinafter also referred to as an outlet cell), during which PM in the exhaust gas is trapped on the trapping layer 24.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells may be polygonal, such as triangular, tetragonal, hexagonal, or octagonal, circular, or streamlined, such as elliptical, or combination thereof. For example, the cells 23 may have a tetragonal cross section perpendicular to the exhaust gas flow direction.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The porosity is measured by a mercury intrusion method. The partition portion 22 preferably has an average pore size of 10 µm or more and 60 µm or less. The average pore size is measured by a mercury intrusion method. The partition portion 22 preferably has a thickness of 150 µm or more and 600 µm or less, more preferably 200 µm or more and 400 µm or less. A thickness of 150 µm or more results in high mechanical strength, and a thickness of 600 µm or less results in low pressure loss. The partition portion 22 having such a porosity, an average pore size, and a thickness allows an exhaust gas to easily pass through the partition portion 22 and PM to be easily trapped and removed.

The trapping layer 24 for trapping and removing PM contained in an exhaust gas may be formed of particle groups having an average particle size smaller than the average pore size of the partition portion 22 and may be disposed on the partition portion 22. The trapping layer 24 preferably has an average pore size of 0.2 µm or more and 10 µm or less and a porosity of 40% by volume or more and 95% by volume or less, and the average size of particles constituting the trapping layer is preferably 0.5 µm or more and 15 µm or less. An average pore size of 0.2 µm or more results in the prevention of an excessive initial pressure loss in the absence of PM deposition. An average pore size of 10 µm or less results in an improvement in trapping efficiency, the prevention of PM entering the pores of the partition portion 22 through the trapping layer 24, and the prevention of the reduction in the effect of decreasing pressure loss during PM deposition. A porosity of 40% by volume or more results in the prevention of an excessive initial pressure loss in the absence of PM deposition. A porosity of 95% by volume or less results in the formation of a surface layer serving as a durable trapping layer 24. When the average size of particles constituting the trapping layer is 0.5 µm or more, a space between the particles constituting the trapping layer can be sufficiently provided, thus ensuring high permeability of the trapping layer and preventing a sudden increase in pressure loss. When the average size of particles constituting the trapping layer is 15 µm or less, there are a sufficient number of points of contact between the particles, ensuring a sufficient bond strength between the particles and a high peel strength of the trapping layer. Thus, it is possible to maintain high PM trapping efficiency, prevent a sudden increase in pressure loss immediately after the start of PM trapping, decrease pressure loss during PM deposition, and impart durability to the trapping layer. The trapping layer 24 preferably has an average thickness of 10 µm or more and 80 µm or less. At a trapping layer thickness of 10 µm or more, it is easy to trap PM. A trapping layer thickness of 80 µm or less results in a decrease in the permeation resistance of a partition and a decrease in pressure loss. The average thickness of the trapping layer is preferably 20 µm or more and 60 µm or less, more preferably 30 µm or more and 50 µm or less. The trapping layer 24 may be formed on the partition portion 22 of each of the exhaust gas inlet and outlet cells. As illustrated in Fig. 1, preferably, the trapping layer 24 is formed on the partition portion 22 of each inlet cell and is not formed on the partition portion 22 of each outlet cell. This allows PM contained in a fluid to be efficiently removed with further decreased pressure loss. Furthermore, this facilitates the manufacture of the honeycomb filter 20. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. More preferably, the trapping layer 24 contains 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite. The average particle size of the particle groups constituting the trapping layer 24 is a mean value measured by observing the trapping layer 24 with a scanning electron microscope (SEM) and measuring the individual particles of the trapping layer 24 in an image obtained. The average particle size of raw material particles is the median size (D50) measured with a laser diffraction/scattering particle size distribution analyzer using water as a dispersion medium.

A method for measuring the thickness of the trapping layer 24 and other components will be described below. First, a method for measuring the thickness of the trapping layer 24 will be described below with reference to Fig. 2. The thickness of the trapping layer 24, in other words, the thickness of the particle groups constituting the trapping layer is determined in the following manner. The thickness of the trapping layer is determined by embedding a partition substrate of the honeycomb filter 20 in a resin and polishing the resin to prepare a sample for observation, observing the sample with a scanning electron microscope (SEM), and analyzing an image obtained. First, the sample for observation is prepared by cutting and polishing such that a cross section perpendicular to the fluid flow direction serves as an observation surface. The observation surface of the sample for observation prepared is photographed at measuring points described below in a visual field of approximately 500 µm x 500 µm at a SEM magnification in the range of 100 to 500. The outermost contour of a partition is then hypothetically drawn on an image obtained. The outermost contour of a partition is a line showing the outline of the partition and refers to a projector obtained by irradiating a partition surface (a surface to be irradiated; see the top in Fig. 2) with hypothetical parallel light in the direction perpendicular to the partition surface (see the middle in Fig. 2). The outermost contour of a partition is composed of line segments corresponding to a plurality of top surfaces of the partition at different levels irradiated with hypothetical light and perpendicular lines each connecting line segments corresponding to adjacent top surfaces of the partition at different levels. The line segments corresponding to the top surfaces of the partition are drawn at "5% resolution", in which, for example, asperities having a length of 5 µm or less are disregarded with respect to a line segment having a length of 100 µm. This prevents the occurrence of too many line segments in the horizontal direction. In the drawing of the outermost contour of a partition, the presence of a trapping layer is disregarded. Subsequently, in the same manner as in the outermost contour of a partition, the outermost contour of the particle groups constituting a trapping layer is hypothetically drawn. The outermost contour of the particle groups is a line showing the outline of the trapping layer and refers to a projector obtained by irradiating a trapping layer surface (a surface to be irradiated; see the top in Fig. 6) with hypothetical parallel light in the direction perpendicular to the trapping layer surface (see the middle in Fig. 2). The outermost contour of the particle groups is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the partition. For a porous trapping layer, in a sample for observation prepared by embedding in a resin and polishing, some particle groups are observed as if they floated in the air. The outermost contour is therefore drawn with the projector obtained by hypothetical light irradiation. Subsequently, the standard reference line of the partition is determined on the basis of the levels and lengths of the line segments of the outermost contour corresponding to the top surfaces of the partition thus drawn. The standard reference line is the average line of the outermost contour of the partition (see the bottom in Fig. 2). In the same manner as in the standard reference line of the partition, the average level of the particle groups is determined on the basis of the levels and lengths of the line segments of the outermost contour corresponding to the top surfaces of the particle groups thus drawn. The average level of the particle groups is the average line of the outermost contour of the particle groups (see the bottom in Fig. 2). The difference (length) between the average level of the particle groups and the standard reference line of the partition is considered to be the thickness of the trapping layer (the thickness of the particle groups) in the image. In this manner, the thickness of a trapping layer can be determined. The thicknesses of a trapping layer measured at a plurality of points of measurement may be averaged to determine the average thickness of the trapping layer.

The average pore size and the porosity of the trapping layer 24 are determined by image analysis based on SEM observation. In the same manner as in the thickness of the trapping layer, as illustrated in Fig. 2, images of a cross section of the honeycomb filter 20 are obtained with SEM. A region between the outermost contour of a partition and the outermost contour of particle groups is considered to be a region occupied by a trapping layer (a trapping layer region). In the trapping layer region, a region including the particle groups is referred to as a "particle group region", and a region including no particle group is referred to as a "pore region of the trapping layer". The area of the trapping layer region (trapping layer area) and the area of the particle group region (particle group area) are determined. The porosity of the trapping layer is calculated by dividing the particle group area by the trapping layer area and multiplying the quotient by 100. In the "pore region of the trapping layer", an incircle inscribed in the outermost contours of the particle groups and the partition and the periphery of the particle groups is drawn such that the diameter of the incircle is as large as possible. In the case that a plurality of incircles can be drawn in one "pore region of the trapping layer", for example, in the case of a rectangular pore region having a large aspect ratio, a plurality of incircles as large as possible are drawn such that the pore region is sufficiently filled with the incircles. In the image observation area, the average diameter of the incircles is considered to be the average pore size of the trapping layer. In this manner, the average pore size and the porosity of the trapping layer 24 can be determined.

A method for forming the trapping layer 24 may involve supplying a gas containing the raw material for the trapping layer to an inlet cell using a gas (air) as a transport medium for the raw material for the trapping layer. This is preferred because the particle groups constituting the trapping layer become coarse and can form a trapping layer having a very high porosity. The raw material for the trapping layer may be inorganic fiber or inorganic particles. The inorganic fiber may be that described above and preferably has an average particle size of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. The raw material for the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell 23 using a slurry containing inorganic particles serving as the raw material of the trapping layer 24.

In a honeycomb filter 20 illustrated in Fig. 3, a portion at which a plurality of partition portions 22 intersect is referred to as a partition-intersecting portion 32, and a portion including the midsection of a partition portion 22 is referred to as a partition central portion 34. A trapping layer 24 at a corner of a cell 23 (in the vicinity of a partition-intersecting portion 32) is referred to as a trapping layer corner 36. A trapping layer 24 formed on a partition central portion 34 is referred to as a trapping layer central portion 38. The definitions of the partition-intersecting portion 32 and the trapping layer corner 36 will be described below with reference to Figs. 3 to 6. A cross section perpendicular to the exhaust gas flow direction is observed with SEM. For example, in an image illustrated in Fig. 3, a center line 12 is drawn between two centers 11 of inlet cells, and a center line 14 is drawn between two centers 13 of outlet cells. Adjacent intersections 15 between the center lines 12 and 14 and corners of cells in a region in which partition portions 22 intersect are connected with a line to form a tetragon. A circle inscribed in the tetragon is referred to as a "partition-intersecting portion". As illustrated in Fig. 4, also in a honeycomb filter 20B, in which the inlet cells have a larger opening area than the outlet cells, a partition-intersecting portion 32B and a partition central portion 34B can be defined in the same manner as described above. Since an exhaust gas flows from an inlet cell to an outlet cell, the tetragon represents a difficult region for the exhaust gas to pass through in an early permeation stage. After a while, the partition central portion becomes difficult for the exhaust gas to pass through because of PM deposition, and the exhaust gas begins to pass through the partition-intersecting portion. With respect to the trapping layer corner 36, adjacent intersections 16 between the center lines 12 and 13 and corners of trapping layers formed on inlet cells and outlet cells in a region in which partition portions 22 intersect are connected with a line to form a tetragon. A sector at which the tetragon and a trapping layer formed on an inlet cell corner overlap each other is referred to as a "trapping layer corner". As illustrated in Fig. 4, also in a honeycomb filter 20B, in which the inlet cells have a larger opening area than the outlet cells, a trapping layer corner 36B and a trapping layer central portion 38B can be defined in the same manner as described above. Since an exhaust gas flows from an inlet cell to an outlet cell, the sector represents a difficult region for the exhaust gas to pass through in an early permeation stage. Regeneration treatment to remove PM deposits by combustion begins with combustion of PM deposited on a trapping layer central portion. Using this combustion as a heat source, PM deposited on a trapping layer corner is burnt. A catalyst in an amount corresponding to the heat source can be decreased.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 µm or more and 30 µm or less. The inorganic fiber may be that described above and preferably has an average diameter of 0.5 µm or more and 8 µm or less and an average length of 100 µm or more and 500 µm or less. The binding material may be colloidal silica or clay. The bonding layer 27 is preferably formed in the range of 0.5 mm or more and 2 mm or less. The average particle size is the median size (D50) measured with a laser diffraction/scattering particle size distribution analyzer using water as a dispersion medium. The outer protective portion 28 is a layer for protecting the periphery of the honeycomb filter 20 and may contain the inorganic particles, the inorganic fiber, and the binding material described above.

In the honeycomb filter 20, the thermal expansion coefficient of the cells 23 in the longitudinal direction at a temperature in the range of 40°C to 800°C is preferably 6.0 x 10⁻⁶/°C or less, more preferably 1.0 x 10⁻⁶/°C or less, still more preferably 0.8 x 10⁶/°C or less. At a thermal expansion coefficient of 6.0 x 10⁻⁶/°C or less, thermal stress generated by exposure to a high-temperature exhaust gas can be within tolerance.

In the honeycomb filter 20, the partition portion 22 and the trapping layer 24 contain a catalyst. The catalyst may be at least one of catalysts for promoting the combustion of trapped PM, catalysts for oxidizing unburned gases (HCs, CO, and the like) contained in an exhaust gas, and catalysts for occluding/adsorbing/decomposing NOx. The catalyst can increase the efficiency of removing PM, oxidizing unburned gases, or decomposing NOx. The catalyst more preferably contains at least one of noble metal elements and transition metal elements. The honeycomb filter 20 may be loaded with another catalyst or a purification material. Among those are a NOx storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOx can more highly purify an exhaust gas.

In a honeycomb filter 20, a catalyst is loaded on partition portions 22 and trapping layers 24 such that the catalyst amount A at a partition-intersecting portion 32 as determined from the element content (% by mass) in elementary analysis with an electron microscope is smaller than the catalyst amount B at a partition central portion 34 as determined from the element content (% by mass) in elementary analysis with an electron microscope. The term "the amount of catalyst", as used herein, may refer to the amount of catalyst per volume of the honeycomb filter 20. The "amount of catalyst" may be used to understand the relationship between the catalyst amount A and the catalyst amount B. The "amount of catalyst" may be the amount of specific catalyst component, for example, noble metal element, such as Pt or Pd, directly measured by elementary analysis with an electron microscope. The amount of catalyst carrier, such as alumina, for supporting a noble metal element measured by elementary analysis with an electron microscope may be indirectly used in place of the amount of noble metal element. In the case that the partition contains the element of the catalyst carrier (for example, alumina), measurements for the catalyst component (such as a noble metal) may be used to determine the relative relationship between the catalyst amount A and the catalyst amount B. A catalyst is loaded such that the ratio A/B of the catalyst amount A to the catalyst amount B is 0.30 or more and 0.90 or less, preferably 0.60 or more and 0.90 or less, more preferably 0.75 or more and 0.85 or less. At a ratio A/B of 0.30 or more, when the exhaust gas flow decreases in a partition central portion 34 and increases in a partition-intersecting portion 32, a catalyst on the partition-intersecting portion can efficiently remove target substances. At a ratio A/B of 0.90 or less, the amount of catalyst can be effectively decreased. The honeycomb filter 20 is preferably loaded with a catalyst such that the catalyst amount C in a trapping layer corner 36 as determined from the element content (% by mass) in elementary analysis with an electron microscope is smaller than the catalyst amount D in a trapping layer central portion 38 as determined from the element content (% by mass) in elementary analysis with an electron microscope. This allows target substances in a fluid to be more efficiently removed with a decreased amount of catalyst on a corner and a central portion of the trapping layers 24. The catalyst is preferably loaded such that the ratio C/D of the catalyst amount C to the catalyst amount D is 0.80 or more and 0.95 or less, more preferably 0.85 or more and 0.90 or less. At a C/D of 0.80 or more, when the fluid flow decreases in a trapping layer central portion 38 and increases in a trapping layer corner 36, a catalyst on the trapping layer corner 36 can efficiently remove target substances. At a ratio C/D of 0.95 or less, the amount of catalyst can be effectively decreased.

The catalyst distribution in the honeycomb filter 20 can be controlled, for example, with a contact time between a solution containing a catalyst component and individual regions of the partition portions 22 and the trapping layers 24. For example, a solution containing a catalyst component is supplied into one cell 23 (for example, an inlet side) and is drawn in by suction from another cell 23 (for example, an outlet side) so as to bring an increased amount of catalyst into contact with the partition central portions 34 and the trapping layer central portions 38. Alternatively, the contact time may be shortened to bring a decreased amount of catalyst into contact with the partition-intersecting portions 32 and the trapping layer corners 36. The catalyst distribution may also be controlled by an empirically determined relationship between the concentration and the contact time of the catalyst component and the amount of catalyst loaded on individual regions. The amount of catalyst is determined as described below. The amounts of catalyst loaded on individual regions are determined by the SEM observation of a partition-intersecting portion 32, a partition central portion 34, a trapping layer corner 36, and a trapping layer central portion 38 in a radial cross section of the honeycomb filter 20 and the measurement of element distribution with an energy dispersive X-ray detector (EDX) or an electron probe microanalyzer (EPMA). The magnification in the SEM observation is not particularly limited provided that clear images can be obtained and may be 100 times or more and 1000 times or less. In EDX measurement, a value (% by mass) measured by scanning a target region is considered to be the concentration in the region. For example, the mass percentage of a catalyst carrier (for example, alumina) of a catalyst loaded on a target region is considered to be the concentration in the region, and the ratio of the mass percentage of the catalyst carrier on a partition-intersecting portion to the mass percentage of the catalyst carrier on a partition central portion may be determined. In the case that a catalyst component (such as Pt) can be directly measured, the mass percentage of the catalyst component in the catalyst is considered to be the concentration in the corresponding region, and the ratio of the catalyst concentration of a partition-intersecting portion to the catalyst concentration of a partition central portion may be determined. As illustrated in Figs. 5 and 6, the points for measuring the amount of catalyst include three points for a partition-intersecting portion 32 along a diagonal line between inlet cells, three points for a partition central portion 34 parallel to the partition, three points for a trapping layer corner 36 along the corner, and three points for a trapping layer central portion 38 along the trapping layer. The amount of catalyst is determined as the mean value of measurements at their respective three points. The amount of catalyst in the flow path direction in a honeycomb filter that includes honeycomb segments 21 joined together is measured in upstream, midstream, and downstream regions of each of the honeycomb segments. The amount of catalyst in the honeycomb filter is determined as the overall average. The amount of catalyst in the upstream region is a mean value of measurements at nine points, that is, the central point and eight points in the outer area, of a cross section located at 20% of the total length from the upstream end face in the flow path direction. Likewise, the amount of catalyst in the midstream region is a mean value of measurements at nine points, that is, the central point and eight points in the outer area, of a cross section located at 50% of the total length from the upstream end face in the flow path direction. The amount of catalyst in the downstream region is a mean value of measurements at nine points, that is, the central point and eight points in the outer area, of a cross section located at 20% of the total length from the downstream end face in the flow path direction. For an integral honeycomb filter, the amounts of catalyst in upstream, midstream, downstream regions of the honeycomb filter are measured at nine points, that is, the central point and eight points in the outer area, and are averaged. Relative concentration differences between the measuring points (the catalyst amount A at a partition-intersecting portion, the catalyst amount B at a partition central portion, the catalyst amount C at a trapping layer corner, and the catalyst amount D at a trapping layer central portion) are determined from the mass percentage ratio.

The honeycomb filters according to the embodiments described above are designed to have a decreased amount of catalyst in a partition-intersecting portion 32 having high permeation resistance to an exhaust gas and an increased amount of catalyst in a partition central portion 34 having low permeation resistance to the exhaust gas to remove target substances (for example, NOx and PM) contained in the exhaust gas. It is believed that partition-intersecting portions of a plurality of partition portions have higher permeation resistance to a fluid than partition central portions and are difficult for the fluid to pass through. Thus, the amount of catalyst can be decreased on partition-intersecting portions having high permeation resistance to a fluid. However, the permeation resistance of the partition central portions increases as solid components in the fluid are trapped. This increases the fluid passing through the partition-intersecting portions. Thus, the partition-intersecting portions also need a catalyst. In accordance with the present invention, the relationship between the amount of catalyst at a partition-intersecting portion and the amount of catalyst at a partition central portion is optimized to purify a fluid with a decreased amount of catalyst. The trapping layers formed on the partition portions can prevent PM from entering the partitions and can obviate the need for an excessive amount of catalyst in consideration of catalyst degradation, thus decreasing the amount of catalyst while an exhaust gas is appropriately purified. Thus, the honeycomb filters can more efficiently remove target substances in an exhaust gas with a decreased amount of catalyst.

The present invention is not limited to the embodiments described above and can be implemented in various aspects within the scope of the present invention as claimed.

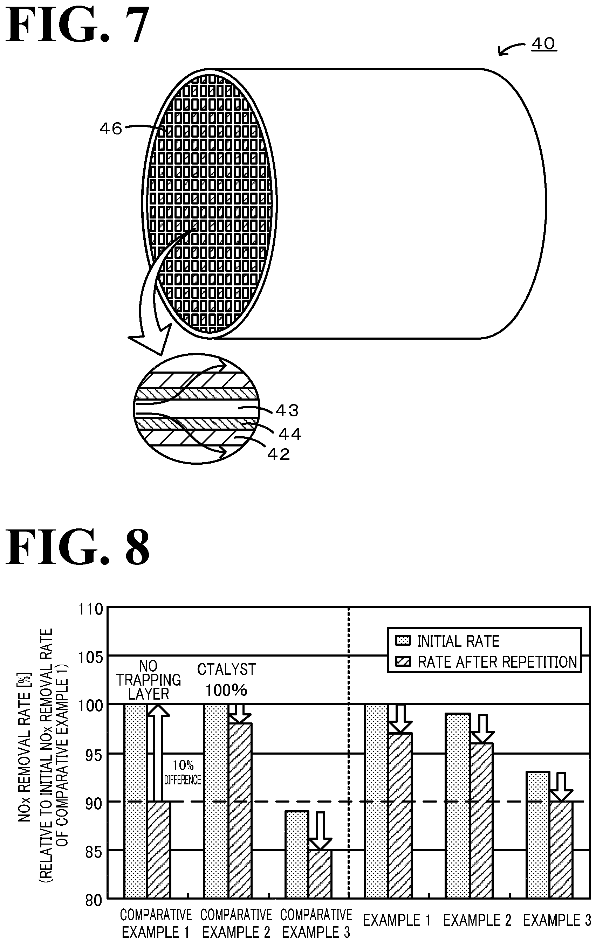

Although the honeycomb segments 21 are joined together with the bonding layer 27 in the honeycomb filter 20 according to the present embodiment, an integrally molded honeycomb filter 40 as illustrated in Fig. 7 is also suitable. In the honeycomb filter 40, partition portions 42, cells 43, trapping layers 44, sealing portions 46, and amount of catalyst may be the same as the partition portions 22, the cells 23, the trapping layers 24, and the sealing portions 26 of the honeycomb filter 20. Even with such a structure, the target substances contained in a fluid with decreased amount of catalyst.

Although the honeycomb filter 20 is loaded with at least one of catalysts for promoting combustion of PM, catalysts for oxidizing unburned gases contained in exhaust gases, and catalysts for decomposing NOx contained in exhaust gases in the embodiments described above, the honeycomb filter 20 may be loaded with any catalyst that can remove target substances contained in a fluid.

### EXAMPLES

Specific examples of the manufacture of a honeycomb filter will be described below. A honeycomb filter including honeycomb segments joined together was manufactured.

### Manufacture of Honeycomb Filter

A SiC powder and a metallic Si powder were mixed at a mass ratio of 80:20. The mixture was kneaded with methylcellulose, hydroxypropoxylmethylcellulose, a surfactant, and water to prepare a plastic pug. The pug was extruded through a die to form a honeycomb segment formed product having a desired shape. The thickness of the partition portion was 0.30 mm, the cell pitch was 1.47 mm, a side of a cross section was 35 mm, and the length was 203.2 mm. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that a cell that was open at one end and closed at the other end and a cell that was closed at one end and open at the other end were alternately disposed. Air containing SiC particles having an average particle size smaller than the average pore size of the partition was introduced from open ends of the honeycomb segment fired product on the exhaust gas inlet side while drawn in by suction from the outlet side of the honeycomb segments. The SiC particles were deposited on the surface layer of the partition on the exhaust gas inlet side. Heat treatment in the atmosphere at 1300°C for two hours was performed to join the SiC particles deposited on the surface layer of the partition together and the deposited SiC particles and SiC and Si particles constituting the partition together. Thus, honeycomb segments were formed in which the trapping layer was formed on the partition portion. A binder slurry prepared by kneading alumina silicate fiber, colloidal silica, poly(vinyl alcohol), silicon carbide, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb structure having a desired shape, segment shape, and cell structure. The honeycomb filter had a cross section diameter of 228.6 mm and a length of 203.2 mm. In Examples 1 to 10 and Comparative Examples 1 to 10 described below, the porosity of the partition portion was 40% by volume, the average pore size was 15 µm, and the average size of particles forming the trapping layer was 2.0 µm. The porosity and the average pore size of the partition portion were measured with a mercury porosimeter (Auto Pore III 9405 manufactured by Micromeritics). The average particle size of the raw material particles of the trapping layer is the median size (D50) measured with a laser diffraction/scattering particle size distribution analyzer (LA-910 manufactured by Horiba, Ltd.) using water as a dispersion medium.

### Catalyst Loading

Raw materials of alumina:platinum:ceria-based material = 7:0.5:2.5 based on the weight ratio, in which the ceria-based material was Ce:Zr:Pr:Y:Mn = 60:20:10:5:5 based on the weight ratio, were mixed to prepare an aqueous catalyst slurry. The outlet end face (exhaust gas outlet side) of the honeycomb structure was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. Although the partition central portions were coated with the catalyst by suction, the partition-intersecting portions 32 were left to stand after the suction and were coated with the catalyst by capillarity. Thus, the amounts of catalyst at the partition-intersecting portions and the trapping layer corners were adjusted to the amounts of catalyst described in the following examples and comparative examples by controlling the holding time after the suction.

### COMPARATIVE EXAMPLE 1

A honeycomb filter according to Comparative Example 1 was fabricated following the Manufacture of Honeycomb Filter and Catalyst Loading described above, wherein the process of forming a trapping layer was not performed (no trapping layer was formed), the wall thickness was 0.30 mm, the cell pitch was 1.47 mm, and the entire honeycomb filter was loaded with 200 g of a catalyst per unit volume of the honeycomb filter. The amounts of catalyst in other samples (Examples 1 to 3 and Comparative Examples 2 and 3) were changed relative to the catalyst amount A at a partition-intersecting portion and the catalyst amount B at a partition central portion in Comparative Example 1, which were set at 100%.

### COMPARATIVE EXAMPLES 2 AND 3

A honeycomb filter according to Comparative Example 2 was fabricated following the Manufacture of Honeycomb Filter and Catalyst Loading described above, wherein the trapping layers were formed, the wall thickness was 0.30 mm, the cell pitch was 1.47 mm, the catalyst amount A at a partition-intersecting portion was 100% based on Comparative Example 1, which was set at 100%, and the catalyst amount B at a partition central portion was 100% based on Comparative Example 1, which was set at 100%. Likewise, a honeycomb filter according to Comparative Example 3 was fabricated, wherein the trapping layers were formed, the wall thickness was 0.30 mm, the cell pitch was 1.47 mm, the catalyst amount A at a partition-intersecting portion was 27% based on Comparative Example 1, which was set at 100%, and the catalyst amount B at a partition central portion was 100% based on Comparative Example 1, which was set at 100%.

### EXAMPLES 1 TO 3

Honeycomb filters according to Examples 1 to 3 were fabricated following the Manufacture of Honeycomb Filter and Catalyst Loading described above, wherein the trapping layers were formed, the partition thickness was 0.30 mm, the cell pitch was 1.47 mm, the catalyst amount A's at a partition-intersecting portion were 90%, 61%, and 30%, respectively, based on Comparative Example 1, which was set at 100%, and the catalyst amount B's at a partition central portion were 100% based on Comparative Example 1, which was set at 100%.

### COMPARATIVE EXAMPLE 4

A honeycomb filter according to Comparative Example 4 was fabricated following the Manufacture of Honeycomb Filter and Catalyst Loading described above, wherein the process of forming a trapping layer was not performed (no trapping layer was formed), the wall thickness was 0.43 mm, the cell pitch was 1.80 mm, and the entire honeycomb filter was loaded with 200 g of a catalyst per unit volume of the honeycomb filter. The amounts of catalyst in other samples (Examples 4 to 6 and Comparative Examples 5 and 6) were changed relative to the catalyst amount A at a partition-intersecting portion and the catalyst amount B at a partition central portion in Comparative Example 4, which were set at 100%.

### COMPARATIVE EXAMPLES 5 AND 6

A honeycomb filter according to Comparative Example 5 was fabricated following the Manufacture of Honeycomb Filter and Catalyst Loading described above, wherein the trapping layers were formed, the wall thickness was 0.43 mm, the cell pitch was 1.80 mm, the catalyst amount A at a partition-intersecting portion was 100% based on Comparative Example 4, which was set at 100%, and the catalyst amount B at a partition central portion was 100% based on Comparative Example 1, which was set at 100%. Likewise, a honeycomb filter according to Comparative Example 6 was fabricated, wherein the trapping layers were formed, the catalyst amount A at a partition-intersecting portion was 26% based on Comparative Example 4, which was set at 100%, and the catalyst amount B at a partition central portion was 100% based on Comparative Example 1, which was set at 100%.

### EXAMPLES 4 TO 6

Honeycomb filters according to Examples 4 to 6 were fabricated following the Manufacture of Honeycomb Filter and Catalyst Loading described above, wherein the trapping layers were formed, the partition thickness was 0.43 mm, the cell pitch was 1.80 mm, the catalyst amount A's at a partition-intersecting portion were 90%, 60%, and 31%, respectively, based on Comparative Example 4, which was set at 100%, and the catalyst amount B's at a partition central portion were 100% based on Comparative Example 1, which was set at 100%.

### COMPARATIVE EXAMPLES 7 AND 8

A honeycomb filter according to Comparative Example 7 was fabricated following the Manufacture of Honeycomb Filter and Catalyst Loading described above, wherein the trapping layers were formed, the wall thickness was 0.30 mm, the cell pitch was 1.47 mm, and the entire honeycomb filter was loaded with 25 g of a catalyst per unit volume of the honeycomb filter. The amounts of catalyst in other samples (Examples 7 and 8 and Comparative Example 8) were changed relative to the catalyst amount C at a trapping layer corner and the catalyst amount D at a trapping layer central portion in Comparative Example 7, which were set at 100%. A honeycomb filter according to Comparative Example 8 was fabricated following the Manufacture of Honeycomb Filter and Catalyst Loading described above, wherein the trapping layers were formed, the wall thickness was 0.30 mm, the cell pitch was 1.47 mm, the catalyst amount C at a trapping layer corner was 78% based on Comparative Example 7, which was set at 100%, and the catalyst amount D at a trapping layer central portion was 100% based on Comparative Example 7, which was set at 100%.

### EXAMPLES 7 AND 8

Honeycomb filters according to Examples 7 and 8 were fabricated following the Manufacture of Honeycomb Filter and Catalyst Loading described above, wherein the trapping layers were formed, the partition thickness was 0.30 mm, the cell pitch was 1.47 mm, the catalyst amount C's at a trapping layer corner were 95% and 80%, respectively, based on Comparative Example 7, which was set at 100%, and the catalyst amount D at a trapping layer central portion was 100% based on Comparative Example 7, which was set at 100%.

### COMPARATIVE EXAMPLES 9 AND 10

A honeycomb filter according to Comparative Example 9 was fabricated following the Manufacture of Honeycomb Filter and Catalyst Loading described above, wherein the trapping layers were formed, the wall thickness was 0.43 mm, the cell pitch was 1.80 mm, and the entire honeycomb filter was loaded with 25 g of a catalyst per unit volume of the honeycomb filter. The amounts of catalyst in other samples (Examples 9 and 10 and Comparative Example 10) were changed relative to the catalyst amount C at a trapping layer corner and the catalyst amount D at a trapping layer central portion in Comparative Example 9, which were set at 100%. A honeycomb filter according to Comparative Example 10 was fabricated following the Manufacture of Honeycomb Filter and Catalyst Loading described above, wherein the trapping layers were formed, the wall thickness was 0.43 mm, the cell pitch was 1.80 mm, the catalyst amount C at a trapping layer corner was 77% based on Comparative Example 9, which was set at 100%, and the catalyst amount D at a trapping layer central portion was 100% based on Comparative Example 7, which was set at 100%.

### EXAMPLES 9 AND 10

Honeycomb filters according to Examples 9 and 10 were fabricated following the Manufacture of Honeycomb Filter and Catalyst Loading described above, wherein the trapping layers were formed, the partition thickness was 0.43 mm, the cell pitch was 1.80 mm, the catalyst amount C's at a trapping layer corner were 95% and 81%, respectively, based on Comparative Example 9, which was set at 100%, and the catalyst amount D at a trapping layer central portion was 100% based on Comparative Example 9, which was set at 100%.

### EXAMPLE 11

A honeycomb filter according to Example 11 was fabricated following the Manufacture of Honeycomb Filter and Catalyst Loading described above, wherein the trapping layers were formed, the partition thickness was 0.30 mm, the cell pitch was 1.47 mm, the catalyst amount A at a partition-intersecting portion was 61% based on Comparative Example 1, which was set at 100%, the catalyst amount B at a partition central portion was 100% based on Comparative Example 1, which was set at 100%, the catalyst amount C at a trapping layer corner was 80% based on Comparative Example 7, which was set at 100%, and the catalyst amount D at a trapping layer central portion was 100% based on Comparative Example 7, which was set at 100%.

### Measurement of Amount of Catalyst

A partition-intersecting portion, a partition central portion, a cell corner, and a trapping layer central portion in a radial cross section in each of upstream, midstream, and downstream regions of a honeycomb segment of a honeycomb filter thus fabricated were observed with a scanning electron microscope (SEM) (S-3200N manufactured by Hitachi High-Technologies Corp.). The element distribution was measured with an energy dispersive X-ray detector (EDX, EMAX-5770W manufactured by Horiba, Ltd.). An observation surface of a sample prepared by mixing and curing a SpeciFix epoxy resin (manufactured by Struers A/S.) and a SpeciFix 20 curing agent (manufactured by Struers A/S.) was polished and observed while being embedded in the resin. The magnification of the SEM observation at the measuring points described above was 150 times. Images taken were analyzed with image analysis software (Image-Pro Plus available from Media Cybernetics, Inc.). The amount of catalyst was indirectly determined using the concentration of a noble metal carrier alumina. Since the main component of the honeycomb filter was SiC, it is easy to measure the concentration of the catalyst carrier alumina. Thus, the amount of catalyst was determined using the concentration of the catalyst carrier alumina.

### Measurement of NOx Removal Rate

The NOx removal rate was measured with a urea SCR system including a diesel engine (8 L/6 cylinders). An exhaust gas and urea for NOx removal were passed through the honeycomb filters according to Examples 1 to 6 and Comparative Examples 1 to 6. The NOx removal rate was calculated from the amounts of NOx measured in front and in the rear of the honeycomb filter. The NOx removal rate for Examples 1 to 3 and Comparative Examples 2 and 3 was calculated relative to Comparative Example 1 (100%), which had no trapping layer and in which the amount of catalyst was not decreased. The NOx removal rate for Examples 4 to 6 and Comparative Examples 5 and 6 was calculated relative to Comparative Example 4 (100%), which had no trapping layer and in which the amount of catalyst was not decreased (see Table 1 below). The NOx removal rate was measured under conditions where the exhaust gas temperature measured 20 mm in front of an inlet end face of the honeycomb filter was 250°C, the exhaust gas flow rate was 380 kg/h, and the NOx/NH3 equivalent ratio was 1.0. The NOx removal rate was measured before PM deposition and after regeneration treatment described below was performed 400 times. The former was referred to as initial NOx removal rate, and the later was referred to as NOx removal rate after repetition.

### Measurement of Regeneration Efficiency

The regeneration efficiency was measured with a diesel engine (8 L/6 cylinders). PM was deposited on the honeycomb filters according to Examples 11 to 20 and Comparative Examples 3 and 4. A high-temperature exhaust gas was then passed through the honeycomb filters to burn the PM deposited on the honeycomb filters (regeneration treatment). The weights of the honeycomb filters before and after regeneration treatment were measured to calculate regeneration efficiency. The regeneration efficiency for Examples 7 and 8 and Comparative Example 8 was calculated relative to Comparative Example 7 (100%), in which the amount of catalyst was not decreased. The regeneration efficiency for Examples 9 and 10 and Comparative Example 10 was calculated relative to Comparative Example 9 (100%), in which the amount of catalyst was not decreased (see Table 2 below). The regeneration efficiency was measured under conditions where the amount of PM deposition was 6 g per external form volume of the honeycomb filter and the exhaust gas temperature measured 20 mm in front of an inlet end face of the honeycomb filter was 600°C.

### Experimental Results

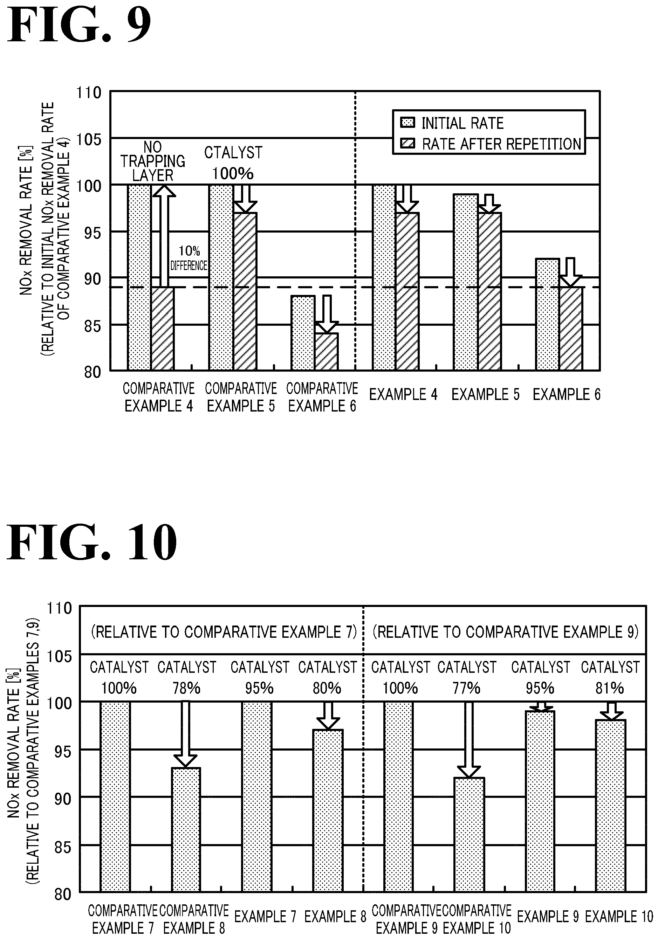

Table 1 summarizes the partition thickness (mm), the cell pitch (mm), the catalyst amount A (%) at a partition-intersecting portion, the catalyst amount B (%) at a partition central portion, the NOx removal rate (%) relative to Comparative Examples 1 and 4, and evaluation results for Examples 1 to 6 and Comparative Examples 1 to 6. Table 2 summarizes the partition thickness (mm), the cell pitch (mm), the catalyst amount C (%) at a trapping layer corner, the catalyst amount D (%) at a trapping layer central portion, the regeneration efficiency (%), and evaluation results for Examples 7 to 10 and Comparative Examples 7 to 10. Fig. 8 shows the measurements of initial NOx removal rate and NOx removal rate after repetition for Comparative Examples 1 to 3 and Examples 1 to 3 relative to Comparative Example 1. Fig. 9 shows the measurements of initial NOx removal rate and NOx removal rate after repetition for Comparative Examples 4 to 6 and Examples 4 to 6 relative to Comparative Example 4. Fig. 10 shows the measurements of regeneration efficiency for Comparative Examples 7 to 10 and Examples 7 to 10 relative to Comparative Examples 7 and 9. The criteria for NOx removal rate in Table 1 were 94% or more (○: good), less than 94% and more than 86% (Δ: fair), and 86% or less (x: poor). At a NOx removal efficiency of 94% or more, NOx emission regulations in various countries can be satisfied independent of the design, including the size and the cell structure, and the position of a honeycomb filter, the vehicle size, or exhaust gas characteristics. At a NOx removal rate of less than 94% and more than 86%, a honeycomb filter installed under a vehicle floor and tested under cold district conditions may fail to satisfy NOx emission regulations. At a NOx removal rate of 86% or less, in order for a honeycomb filter installed under a vehicle floor and tested under cold district conditions to satisfy emission regulations, a NOx treatment catalyst carrier must be installed downstream of the DPF. The criteria for regeneration efficiency in Table 2 were 106% or more (○: good), less than 106 and more than 95% (Δ: equivalent), and 95% or less (x: poor). At regeneration efficiency of 106% or more, regeneration does not affect the mileage. At regeneration efficiency of less than 106% and more than 95%, regeneration decreases the mileage by approximately 1%. At regeneration efficiency of 95% or less, regeneration decreases the mileage by approximately 3%. As shown in Figs. 8 and 9 and Table 1, Examples 1 to 6, particularly Examples 1, 2, 4, and 5, had a high NOx removal rate with a decreased amount of catalyst, showing good results. As shown in Table 2, Examples 7 to 10 had high regeneration efficiency with a decreased amount of catalyst, showing good results. Thus, the partition-intersecting portions 32 and the trapping layer corners 36 have relatively high permeation resistance to an exhaust gas and therefore require a decreased amount of catalyst. PM deposition on a partition-intersecting portion 32 or a partition central portion 34 increases the exhaust gas flow through a partition-intersecting portion 32 or a trapping layer corner 36. Thus, it is also found that some catalyst loading on the partition-intersecting portion 32 or the trapping layer corner 36 can prevent the reduction in removal efficiency for target substances, such as NOx and PM, in the exhaust gas. In Comparative Examples 1 and 4, which had no trapping layer, repetitive use causes catalyst degradation. Thus, Comparative Examples 1 and 4 require a somewhat excessive amount of catalyst. In contrast, in Examples 1 to 6, which had a trapping layer, catalyst degradation resulting from repetitive use can be reduced. Thus, the catalyst in an amount corresponding to the reduced catalyst degradation can be decreased. In Examples 7 to 10, in removal of PM by combustion, the amount of catalyst at a trapping layer corner can be decreased while the reduction in regeneration efficiency is prevented. These tendencies are found to be independent of the thickness of a partition portion or the cell pitch.

In Example 11, the initial NOx removal rate was 99%, and the NOx removal rate after repetition was 96%, which were judged to be "○: good". The regeneration efficiency was 98%, which were judged to be "Δ: fair", showing favorable results. These results demonstrate that, when the ratio A/B of the catalyst amount A at a partition-intersecting portion to the catalyst amount B at a partition central portion is 0.30 or more and 0.90 or less, and when the ratio C/D of the catalyst amount C at a trapping layer corner to the catalyst amount D at a trapping layer central portion is 0.80 or more and 0.95 or less, PM can be more efficiently removed with a decreased amount of catalyst.

**Table 1**

| SAMPLE | CELL STRUCTURE | | CATALYST AMOUNT¹⁾ | | EXPERIMENTAL RESULT | | EVALUATION RESULT | |
|---|---|---|---|---|---|---|---|---|
| | PARTITION THICKNESS (mm) | CELL PITCH (mm) | PARTITION INTERSECTING PORTION A(%) | PARTITION CENTRAL PORTION B(%) | INITIAL NOx REMOVAL RATE²⁾ (%) | NOx REMOVAL RATE AFTER REPETITION²⁾ (%) | EVALUATION AFTER REPETITION³⁾ | DECREASE IN CATALYST AMOUNT |
| COMPARATIVE EXAMPLE 1⁴⁾ | 0.30 | 1.47 | 100% | 100% | 100% | 90% | - | NO |
| COMPARATIVE EXAMPLE 2 | 0.30 | 1.47 | 100% | 100% | 100% | 98% | ○ | NO |
| EXAMPLE 1 | 0.30 | 1.47 | 90% | 100% | 100% | 97% | ○ | YES |
| EXAMPLE 2 | 0.30 | 1.47 | 61% | 100% | 99% | 96% | ○ | YES |
| EXAMPLE 3 | 0.30 | 1.47 | 30% | 100% | 93% | 90% | Δ | YES |
| COMPARATIVE EXAMPLE 3 | 0.30 | 1.47 | 27% | 100% | 89% | 85% | × | YES |
| COMPARATIVE EXAMPLE 4⁴⁾ | 0.43 | 1.80 | 100% | 100% | 100% | 89% | - | NO |
| COMPARATIVE EXAMPLE 5 | 0.43 | 1.80 | 100% | 100% | 100% | 97% | ○ | NO |
| EXAMPLE 4 | 0.43 | 1.80 | 90% | 100% | 100% | 97% | ○ | YES |
| EXAMPLE 5 | 0.43 | 1.80 | 60% | 100% | 99% | 97% | ○ | YES |
| EXAMPLE 6 | 0.43 | 1.80 | 31% | 100% | 92% | 89% | Δ | YES |
| COMPARATIVE EXAMPLE 6 | 0.43 | 1.80 | 26% | 100% | 88% | 84% | × | YES |

| | | | | | | | | |
|---|---|---|---|---|---|---|---|---|
| 1) CATALYST AMOUNT 100% = 200g/L···CATALYST AMOUNT PER UNIT VOLUME OF EXTERNAL FORM OF DPF 2) NOx REMOVAL RATE %: RATIO OF NOx AMOUNT IN DOWNSTREAM REGION TO NOx AMOUNT IN UPSTREAM REGION OF HONEYCOMB FILTER CALCULATED RELATIVE TO NOx REMOVAL MOUNT IN COMPARATIOVE EXAMPLE 1 OR 2 (WHICH IS 100%) INITIAL RATE: RATE BEFORE PM DEPOSITION, RATE AFTER REPETITION: RATE AFTER PERFORMANCE OF PM REGENERATION PM 400 TIMES 3) CRITERIA : AFTER REPETITION OF PM REGENERATION, ○:94% OR MORE, Δ: 93%-87%, × :86% OR LESS 4) NO TRAPPING LAYER | | | | | | | | |

**Table 2**

| SAMPLE | CELL STRUCTURE | | CATALYST AMOUNT¹⁾ | | EXPERIMENTAL RESULT | EVALUATION RESULT | |
|---|---|---|---|---|---|---|---|
| | PARTITION THICKNESS (mm) | CELL PITCH (mm) | TRAPPING LAYER CORNER C(%) | TRAPPING LAYER CENTRAL PORTION D(%) | PM REGENERATION EFFICIENCY²⁾ (%) | EVALUATION OF REGENERATION EFFICINECY³⁾ | DECREASE IN CATALYST AMOUNT |
| COMPARATIVE EXAMPLE 7 | 0.30 | 1.47 | 100% | 100% | 100% | - | NO |
| EXAMPLE 7 | 0.30 | 1.47 | 95% | 100% | 100% | Δ | YES |
| EXAMPLE 8 | 0.30 | 1.47 | 80% | 100% | 97% | Δ | YES |
| COMPARATIVE EXAMPLE 8 | 0.30 | 1.47 | 78% | 100% | 93% | × | YES |
| COMPARATIVE EXAMPLE 9 | 0.43 | 1.80 | 100% | 100% | 100% | - | NO |
| EXAMPLE 9 | 0.43 | 1.80 | 95% | 100% | 99% | Δ | YES |
| EXAMPLE 10 | 0.43 | 1.80 | 81% | 100% | 98% | Δ | YES |
| COMPARATIVE EXAMPLE 10 | 0.43 | 1.80 | 77% | 100% | 92% | × | YES |

| | | | | | | | |
|---|---|---|---|---|---|---|---|
| 1) CATALYST AMOUNT 100%= 25g/L···CATALYST AMOUNT PER UNIT VOLUME OF EXTERNAL FORM OF DPF 2) PM REGENERATION EFFICIENCY: RATIO OF DECREASE IN PM AMOUNT AFTER PM REGENERATION RELATIVE TO PM AMOUNT BEFORE PM REGENERATION CALCULATED RELATIVE TO PM REGENERATION EFFICIENCY IN COMPARATIOVE EXAMPLE 7 OR 9 (WHICH IS 100%) 3) CRITERIA : ○ : 106% OR MORE, Δ(EQUIVALENT): 105%-96%, × : 95% OR LESS | | | | | | | |

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20), comprising:
a plurality of porous partition portions (22) each forming a cell (23) that is open at one end and closed at the other end and serves as a flow path of a fluid, at least part of each of the partition portions (22) being loaded with a catalyst; and
a trapping layer (24) for trapping and removing solid components contained in the fluid, the trapping layer (24) being disposed on each of the partition portions (22), at least part of the trapping layer (24) being loaded with a catalyst,
**characterized in that**
a catalyst amount A at a partition-intersecting portion (32) of the plurality of partition portions (22) and a catalyst amount B at a partition central portion (34) including a midsection of the partition portions (22) satisfy the relationship of 0.30 ≤ A/B ≤ 0.90,
wherein the amounts of catalyst A and B are determined by: elementary analysis with an electron microscope to determine the % by mass of the catalyst; and then determining the amount of catalyst per apparent unit volume by multiplying the % by mass of catalyst by the total weight of the honeycomb filter and dividing the product by the volume of the honeycomb filter,
wherein, in a cross section perpendicular to the fluid flow path direction, a center line (12) is drawn between two centers (11) of inlet cells, and a center line (14) is drawn between two centers (13) of outlet cells, adjacent intersections (15) between the center lines (12, 14) and corners of cells (23) in a region in which partition portions (22) intersect are connected with a line to form a tetragon, a circle inscribed in the tetragon being referred to as the partition-intersecting portion (32), the partition central portion (34) being outside the tetragon.

2. The honeycomb filter according to Claim 1, wherein the catalyst amount A and the catalyst amount B satisfy the relationship of 0.60 ≤ A/B ≤ 0.90.

3. The honeycomb filter according to Claim 1 or 2, wherein the trapping layers (24) are loaded with a catalyst, a catalyst amount C at a trapping layer corner (36), which is a portion of a trapping layer formed on a corner of a cell (23), and a catalyst amount D at a trapping layer central portion (38), which is a portion of a trapping layer (24) formed on a midsection of a partition portion (22), satisfy the relationship of 0.80 ≤ C/D ≤ 0.95,
wherein the amounts of catalyst C and D are determined by: elementary analysis with an electron microscope to determine the % by mass of the catalyst; and then determining the amount of catalyst per apparent unit volume by multiplying the % by mass of catalyst by the total weight of the honeycomb filter and dividing the product by the volume of the honeycomb filter,
wherein the trapping layer central portion (38) is formed on the partition central portion (34),
wherein, in said cross section perpendicular to the fluid flow path direction, adjacent intersections (16) between the center lines (12, 14) and corners of trapping layers (24) formed on inlet cells and outlet cells in a region in which partition portions (22) intersect are connected with a line to form a trapping layer tetragon, a sector at which the trapping layer tetragon and said trapping layer formed on an inlet cell corner overlap each other is referred to as said trapping layer corner (36), the trapping layer central portion (38) being outside the trapping layer tetragon.

4. The honeycomb filter according to any one of Claims 1 to 3, wherein the catalyst is at least one of a catalyst for promoting combustion of trapped solid components, a catalyst for oxidizing unburned gases contained in the fluid, and a catalyst for decomposing nitrogen compounds.

5. The honeycomb filter according to any one of Claims 1 to 4, wherein the trapping layers (24) are formed by supplying an inorganic material that is a raw material for the trapping layers to the cells using a gas as a transport medium.

6. The honeycomb filter according to any one of Claims 1 to 5, wherein the partition portions contain one or more inorganic materials selected from cordierite, SiC, mullite, aluminium titanate, alumina, silicon nitride, SIALON, zirconium phosphate, zirconia, titania, and silica.

7. The honeycomb filter according to any one of Claims 1 to 6, wherein the trapping layers contain one or more inorganic materials selected from cordierite, SiC, mullite, aluminium titanate, alumina, silicon nitride, SIALON, zirconium phosphate, zirconia, titania, and silica.

8. The honeycomb filter according to any one of Claims 1 to 7, wherein the honeycomb filter (20) is formed by joining two or more honeycomb segments (21) with a bonding layer (27), each of the honeycomb segments (21) having the partition portion (22) and the trapping layer (24).

## Patentansprüche

1. Wabenfilter (20), umfassend:
eine Vielzahl von porösen Trennwandabschnitten (22), die jeweils eine Zelle (23) bilden, die an einem Ende offen und an dem anderen Ende verschlossen ist, und als ein Strömungspfad eines Fluids dient, wobei zumindest ein Teil von jedem der Trennwandabschnitte (22) mit einem Katalysator beladen ist; und
eine Einfangschicht (24) zum Einfangen und Entfernen von in dem Fluid enthaltenen Feststoffkomponenten, wobei die Einfangschicht (24) auf jedem der Trennwandabschnitte (22) angeordnet ist, wobei zumindest ein Teil der Einfangschicht (24) mit einem Katalysator beladen ist,
**dadurch gekennzeichnet,**
**dass** eine Katalysatormenge A in einem Trennwand-Kreuzungsabschnitt (32) aus der Vielzahl von Trennwandabschnitten (22) und eine Katalysatormenge B in einem Trennwand-Mittelabschnitt (34), umfassend einen Mittelteil der Trennwandabschnitte (22), die Beziehung von 0,30 ≤ A/B ≤ 0,90 erfüllen,
wobei die Mengen von Katalysator A und B durch Folgendes bestimmt werden: Elementaranalyse mit einem Elektronenmikroskop zum Bestimmen der Masse-% des Katalysators; und anschließendes Bestimmen der Katalysatormenge pro Einheitsscheinvolumen durch Multiplizieren der Masse-% des Katalysators mit dem Gesamtgewicht des Wabenfilters und Dividieren des Produkts durch das Volumen des Wabenfilters,
wobei in einem zur Fluidströmungspfadrichtung senkrechten Querschnitt eine Mittellinie (12) zwischen zwei Mittelpunkten (11) von Einlasszellen gezogen wird, und eine Mittellinie (14) zwischen zwei Mittelpunkten (13) von Auslasszellen gezogen wird, angrenzend angeordnete Schnittpunkte (15) zwischen den Mittellinien (12, 14) und den Eckpunkten von Zellen (23) in einer Region, in der Trennwandabschnitte (22) einander kreuzen, mit einer Linie zur Ausbildung eines Tetragons verbunden werden, ein in dem Tetragon eingeschriebener Kreis als der Trennwand-Kreuzungsabschnitt (32) bezeichnet wird, wobei der Trennwand-Mittelabschnitt (34) außerhalb des Tetragons angeordnet ist.

2. Wabenfilter gemäß Anspruch 1, wobei die Katalysatormenge A und die Katalysatormenge B die Beziehung von 0,60 ≤ A/B ≤ 0,90 erfüllen.

3. Wabenfilter gemäß Anspruch 1 oder 2, wobei die Einfangschichten (24) mit einem Katalysator beladen sind, wobei eine Katalysatormenge C in einem Einfangschichteckpunkt (36), der ein Abschnitt einer auf einem Eckpunkt einer Zelle (23) ausgebildeten Einfangschicht ist, und eine Katalysatormenge D in einem Einfangschicht-Mittelabschnitt (38), der ein Abschnitt einer auf einem Mittelteil eines Trennwandabschnitts (22) ausgebildeten Einfangschicht (24) ist, die Beziehung von 0,80 ≤ C/D ≤ 0,95 erfüllen,
wobei die Mengen von Katalysator C und D durch Folgendes bestimmt werden: Elementaranalyse mit einem Elektronenmikroskop zum Bestimmen der Masse-% des Katalysators; und anschließendes Bestimmen der Katalysatormenge pro Einheitsscheinvolumen durch Multiplizieren der Masse-% eines Katalysators mit dem Gesamtgewicht des Wabenfilters und Dividieren des Produkts durch das Volumen des Wabenfilters,
wobei der Einfangschicht-Mittelabschnitt (38) auf dem Trennwand-Mittelabschnitt (34) ausgebildet ist,
wobei in dem zur Fluidströmungspfadrichtung senkrechten Querschnitt angrenzend angeordnete Schnittpunkte (16) zwischen den Mittellinien (12, 14) und den Eckpunkten von Einfangschichten (24), die auf Einlasszellen und Auslasszellen in einer Region ausgebildet sind, in der Trennwandabschnitte (22) einander kreuzen, mit einer Linie zur Ausbildung eines Einfangschicht-Tetragons verbunden sind, wobei ein Teil, in dem das Einfangschicht-Tetragon und die auf einem Einlasszelleneckpunkt ausgebildete Einfangschicht einander überlappen, als der Einfangschichteckpunkt (36) bezeichnet wird, wobei der Einfangschicht-Mittelabschnitt (38) außerhalb des Einfangschicht-Tetragons angeordnet ist.

4. Wabenfilter gemäß einem der Ansprüche 1 bis 3, wobei der Katalysator zumindest einer von folgenden ist: ein Katalysator zum Fördern der Verbrennung von eingefangenen Feststoffkomponenten, ein Katalysator zum Oxidieren von in dem Fluid enthaltenen, unverbrannten Gasen und ein Katalysator zum Abbauen von Stickstoffverbindungen.

5. Wabenfilter gemäß einem der Ansprüche 1 bis 4, wobei die Einfangschichten (24) durch Zuführen eines anorganischen Materials, das ein Rohmaterial für die Einfangschichten ist, zu den Zellen durch Verwendung eines Gases als ein Transportmittel gebildet werden.

6. Wabenfilter gemäß einem der Ansprüche 1 bis 5, wobei die Trennwandabschnitte eines oder mehrere anorganische Materialien enthalten, die aus Cordierit, SiC, Mullit, Aluminiumtitanat, Aluminiumdioxid, Siliciumnitrid, SIALON, Zirconiumphosphat, Zirconiumdioxid, Titandioxid und Siliciumdioxid ausgewählt sind.

7. Wabenfilter gemäß einem der Ansprüche 1 bis 6, wobei die Einfangschichten eines oder mehrere anorganische Materialien enthalten, die aus Cordierit, SiC, Mullit, Aluminiumtitanat, Aluminiumdioxid, Siliciumnitirid, SIALON, Zirconiumphosphat, Zirconiumdioxid, Titandioxid und Siliciumdioxid ausgewählt sind.

8. Wabenfilter gemäß einem der Ansprüche 1 bis 7, wobei das Wabenfilter (20) durch Zusammenfügen von zwei oder mehreren Wabensegmenten (21) mit einer Verbindungsschicht (27) gebildet wird, wobei jedes von den Wabensegmenten (21) den Trennwandabschnitt (22) und die Einfangschicht (24) aufweisen.

## Revendications

1. Filtre en nid d'abeilles (20) comprenant :
une pluralité de parties de séparation poreuses (22) formant chacune une cellule (23) qui est ouverte à une première extrémité et fermée à l'autre extrémité et sert de trajet d'écoulement d'un fluide, au moins une partie de chacune des parties de séparation (22) étant chargée avec un catalyseur ; et
une couche de piégeage (24) pour piéger et éliminer des composants solides contenus dans le fluide, la couche de piégeage (24) étant disposée sur chacune des parties de séparation (22), au moins une partie de la couche de piégeage (24) étant chargée avec un catalyseur,
**caractérisé en ce que**
une quantité de catalyseur A au niveau d'une partie d'intersection de séparation (32) de la pluralité de parties de séparation (22) et une quantité de catalyseur B au niveau d'une partie centrale de séparation (34) comprenant une section médiane des parties de séparation (22) satisfont la relation de 0,30 ≤ A/B ≤ 0,90,
dans lequel les quantités de catalyseur A et B sont déterminées par : une analyse élémentaire avec un microscope électronique pour déterminer le pourcentage en masse du catalyseur ; et ensuite détermination de la quantité de catalyseur par volume unitaire apparent en multipliant le pourcentage en masse de catalyseur par le poids total du filtre en nid d'abeilles et en divisant le produit par le volume du filtre en nid d'abeilles,
dans lequel, dans une section transversale perpendiculaire à la direction de trajet d'écoulement de fluide, une ligne médiane (12) est tracée entre deux centres (11) de cellules d'entrée, et une ligne médiane (14) est tracée entre deux centres (13) de cellules de sortie, des intersections adjacentes (15) entre les lignes centrales (12, 14) et des coins de cellules (23) dans une région dans laquelle des parties de séparation (22) se recoupent sont connectées à une ligne pour former un tétragone, un cercle inscrit dans le tétragone étant appelé partie d'intersection de séparation (32), la partie centrale de séparation (34) étant à l'extérieur du tétragone.

2. Filtre en nid d'abeilles selon la revendication 1, dans lequel la quantité de catalyseur A et la quantité de catalyseur B satisfont à la relation de 0,60 ≤ A/B ≤ 0,90.

3. Filtre en nid d'abeilles selon la revendication 1 ou 2, dans lequel les couches de piégeage (24) sont chargées avec un catalyseur, une quantité de catalyseur C au niveau d'un coin de couche de piégeage (36), qui est une partie d'une couche de piégeage formée sur un coin d'une cellule (23) et une quantité de catalyseur D au niveau d'une partie centrale de couche de piégeage (38), qui est une partie d'une couche de piégeage (24) formée sur une section médiane d'une partie de séparation (22), satisfont la relation de 0,80 ≤ C/D ≤ 0,95,
dans lequel les quantités de catalyseur C et D sont déterminées par : une analyse élémentaire avec un microscope électronique pour déterminer le pourcentage en masse du catalyseur ; et ensuite une détermination de la quantité de catalyseur par volume unitaire apparent en multipliant le pourcentage en masse de catalyseur par le poids total du filtre en nid d'abeilles et en divisant le produit par le volume du filtre en nid d'abeilles,
dans lequel la partie centrale de couche de piégeage (38) est formée sur la partie centrale de séparation (34),
dans lequel, dans ladite section transversale perpendiculaire à la direction de trajet d'écoulement de fluide, des intersections adjacentes (16) entre les lignes centrales (12, 14) et des coins de couche de piégeage (24) formées sur des cellules d'entrée et des cellules de sortie dans une région dans laquelle des parties de séparation (22) se recoupent sont reliées par une ligne pour former un tétragone de couche de piégeage, un secteur dans lequel le tétragone de couche de piégeage et ladite couche de piégeage formée sur un coin de cellule d'entrée se chevauchent est indiqué en tant que ledit coin de couche de piégeage (36), la partie centrale de couche de piégeage (38) se trouvant en dehors du tétragone de couche de piégeage.

4. Filtre en nid d'abeilles selon l'une quelconque des revendications 1 à 3, dans lequel le catalyseur est au moins un parmi un catalyseur pour favoriser la combustion de composants solides piégés, un catalyseur pour oxyder des gaz non brûlés contenus dans le fluide et un catalyseur pour décomposer les composés azotés.

5. Filtre en nid d'abeilles selon l'une quelconque des revendications 1 à 4, dans lequel les couches de piégeage (24) sont formées en fournissant un matériau inorganique qui est une matière première pour les couches de piégeage aux cellules en utilisant un gaz comme milieu de transport.

6. Filtre en nid d'abeilles selon l'une quelconque des revendications 1 à 5, dans lequel les parties de séparation contiennent un ou plusieurs matériaux inorganiques choisis parmi la cordiérite, le SiC, la mullite, le titanate d'aluminium, l'alumine, le nitrure de silicium, le SIALON, le phosphate de zirconium, la zircone, l'oxyde de titane, et la silice.

7. Filtre en nid d'abeilles selon l'une quelconque des revendications 1 à 6, dans lequel les couches de piégeage contiennent un ou plusieurs matériaux inorganiques choisis parmi la cordiérite, le SiC, la mullite, le titanate d'aluminium, l'alumine, le nitrure de silicium, le SIALON, le phosphate de zirconium, la zircone, l'oxyde de titane, et la silice.

8. Filtre en nid d'abeilles selon l'une quelconque des revendications 1 à 7, dans lequel le filtre en nid d'abeilles (20) est formé par la jonction d'au moins deux segments en nid d'abeilles (21) avec une couche de liaison (27), chacun des segments en nid d'abeilles (21) ayant la partie de séparation (22) et la couche de piégeage (24).
